# DEMANDE DE BREVET EUROPEEN

(11) **EP 2 051 041 A2**
(43) Date de publication de la demande: **22.04.2009**
(21) Numéro de dépôt: 08166823.8
(22) Date de dépôt: 16.10.2008
(51) Int. Cl.: G01B 7/16

(54) **Porte-plaquette instrumenté pour machine outil et porte-outil associé**

(30) Priorité: 16.10.2007 FR 0707255
(71) Demandeur: Centre Technique de l'Industrie du Decolletage, 74300 Cluses (FR)
(72) Inventeur: Busi, Roger, 74800, St. Laurent (FR)
(74) Mandataire: Croonenbroek, Thomas Jakob

(57) **Abrégé**

L'invention concerne un porte-plaquette instrumenté pour machine-outil comportant un porte-plaquette (3) pour machine-outil et un dispositif de mesure apte à déterminer un paramètre représentatif d'une action de coupe entre une pièce à usiner et une plaquette (5), monté sur ledit porte-plaquette (3), ledit dispositif de mesure comportant au moins un capteur de mesure (6) d'une déformation mécanique, **caractérisé en ce que** le dispositif de mesure comporte une structure porteuse (8) d'amplification de la déformation mécanique disposée entre ledit capteur (6) et ledit porte-plaquette (3), ladite structure porteuse (8) comportant deux pattes (20, 22) disposées parallèlement sur une face d'une zone de déformation mécanique du porte-plaquette (3), de manière à transmettre la déformation mécanique de façon amplifiée au niveau dudit capteur (6).
En outre, l'invention concerne un porte-outil (1) destiné à être monté sur une machine-outil, **caractérisé en ce qu'**il comporte un porte-plaquette instrumenté tel que précédemment décrit.

## Description

La présente invention concerne un porte-plaquette instrumenté pour machine-outil comportant un porte-plaquette et un dispositif de mesure apte à déterminer un paramètre représentatif d'une action de coupe entre une pièce à usiner et une plaquette, monté sur le porte-plaquette. L'invention a également pour objet un porte-outil associé.

L'augmentation de la productivité, les contraintes de qualité de l'usinage liées par exemple, à l'état de surface des pièces usinées, ainsi que l'évolution des matériaux des pièces à usiner, nécessitent la constante évolution des procédés d'usinage.

Afin d'atteindre les nouveaux critères de performances requis, des méthodologies visant à optimiser les conditions de coupe ont été développées.

Ainsi, on connaît le concept industriel de couple outil - matière (COM) définit par la norme NFE 66-520 pour la sélection des paramètres d'entrée de coupe tels que l'avance, la profondeur de coupe, la largeur de passe ou la vitesse de coupe des outils dans la matière à usiner.

Cette norme préconise que les conditions d'usinage soient propres à un couple outil - matière usinée, et qu'une étude de l'évolution de paramètres de sortie de coupe, tels que la forme des copeaux, les efforts de coupe ou la puissance de la broche de la machine-outil, permette la détermination d'un domaine d'emploi optimal en termes de conditions de coupe telles que les plages d'avances et de vitesses de coupe des outils dans la matière à usiner.

On s'intéresse donc plus précisément à l'instrumentation les machines-outils pour la surveillance des paramètres de sortie de coupe, via la mesure de paramètres représentatifs d'une action de coupe.

On connaît déjà des outils instrumentés de capteurs pour la mesure de paramètres représentatifs d'une action de coupe en cours d'usinage.

Ainsi, la demande de brevet français FR 2 616 218, décrit un procédé pour la détection de pièces d'usure dans lequel on intègre une sonde électrique dans l'outil pour détecter le contact avec la pièce en cours d'usinage lorsque l'usure atteint la sonde.

Toutefois, l'emplacement de la sonde dans l'outil n'est pas l'emplacement le plus adapté pour réaliser une mesure représentative d'un paramètre de coupe.

Pour pallier à ces inconvénients, l'invention propose un porte-plaquette instrumenté pour machine-outil comportant un porte-plaquette pour machine-outil et un dispositif de mesure apte à déterminer un paramètre représentatif d'une action de coupe entre une pièce à usiner et une plaquette, monté sur ledit porte-plaquette, ledit dispositif de mesure comportant au moins un capteur de mesure d'une déformation mécanique, caractérisé en ce que le dispositif de mesure comporte une structure porteuse d'amplification de la déformation mécanique disposée entre ledit capteur et ledit porte-plaquette, ladite structure porteuse comportant deux pattes disposées parallèlement sur une face d'une zone de déformation mécanique du porte-plaquette, de manière à transmettre la déformation mécanique de façon amplifiée au niveau dudit capteur.

Ainsi, il est facile pour un opérateur d'agencer un dispositif de mesure sur des porte-plaquettes existants, sans nécessiter un agencement compliqué. L'opérateur peut ainsi équiper les porte-plaquettes existants sans avoir à modifier le porte-plaquette par des usinages couteux et qui pourraient fragiliser le porte-plaquette.

Par ailleurs, ce dispositif de mesure présente l'avantage de pouvoir être disposé au plus prés de la plaquette et donc de l'effort à mesurer.

Selon une ou plusieurs caractéristiques du porte-plaquette, prise seule ou en combinaison,
- la structure porteuse présente la forme générale d'un pontet,
- la structure porteuse est l'unique lien entre le porte-plaquette et ledit capteur, ainsi, ledit capteur n'est pas influencé par des déformations supplémentaires provenant par exemple des vibrations produites par la machine-outil, de sorte que celle-ci n'a pas d'influence sur la mesure de la déformation mécanique et ne peut pas, par exemple, absorber certains paramètres de la mesure,
- la structure porteuse comporte une plaque support pour porter ledit capteur,
- le capteur de mesure comporte au moins une jauge de contrainte,
- le capteur de mesure est un dynamomètre de type piézo-électrique,
- les deux pattes sont reliées à ladite zone de déformation par collage,
- chaque patte est assemblée et collée à ladite zone de déformation comportant une rainure correspondante à chaque patte,
- le porte-plaquette instrumenté comporte une sous-plaquette destinée à être montée entre le porte-plaquette et une plaquette de coupe et les deux pattes sont collées dans une zone de déformation de la sous-plaquette,
- l'axe longitudinal du capteur est placé parallèlement en-dessus ou en-dessous d'une fibre neutre du porte-plaquette.

L'invention a aussi pour objet un porte-outil destiné à être monté sur une machine-outil, caractérisé en ce qu'il comporte un porte-plaquette instrumenté tel que précédemment décrit.

D'autres avantages et caractéristiques apparaîtront à la lecture de la description de l'invention, ainsi que des dessins annexés sur lesquels :
- la figure la est une vue schématique de coté du porte-outil comportant un dispositif de mesure selon un premier mode de réalisation de l'invention et
- la figure 1b est une vue schématique de dessous du porte-outil de la figure 1a,
- la figure 2a est une vue schématique de coté du porte-outil comportant un dispositif de mesure selon un deuxième mode de réalisation de l'invention et
- la figure 2b est une vue schématique de dessous du porte-outil de la figure 2a. Sur ces figures, les éléments identiques portent les mêmes numéros de référence.

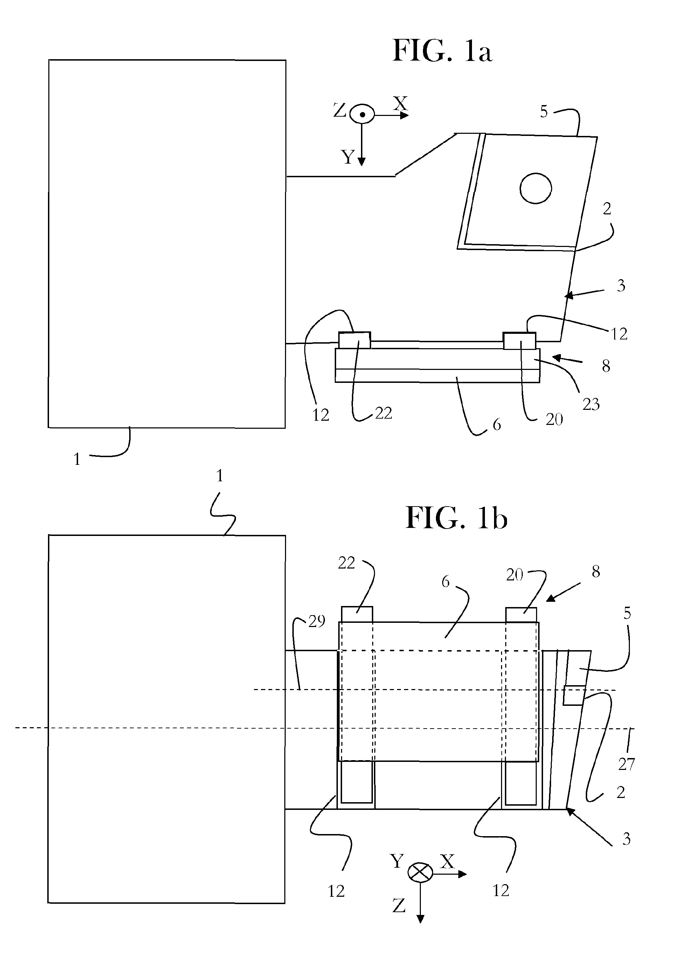

La figure 1a illustre un porte-outil 1 destiné à être monté sur une machine-outil (non représentée), telle qu'une décolleteuse.

Le porte-outil 1 comporte un porte-plaquette instrumenté comportant un porte-plaquette 3 interchangeable apte à recevoir une plaquette de coupe 5 pour l'usinage d'une pièce (non visible).

Le porte-plaquette 3 peut comporter une sous-plaquette 2, de préférence en carbure et destinée à être montée contre la plaquette de coupe 5.

Le porte-plaquette 3 permet de changer aisément la plaquette coupante 5 lorsque celle-ci est usée ou inadaptée sans avoir à changer l'ensemble porte-outil 1 au complet.

La plaquette de coupe 5, présentant dans cet exemple une forme rhombique, est de préférence en matériau fritté (carbure ou céramique).

La plaquette 5 est portée et maintenue fixée au porte-plaquette 3 correspondant par une fixation classique, par exemple brasée sur le porte-plaquette 3 ou montée de manière amovible.

On prévoit un dispositif de mesure apte à déterminer un paramètre représentatif d'une action de coupe entre une pièce à usiner et une plaquette 5, monté sur le porte-plaquette 3.

Le dispositif de mesure comporte d'une part, au moins un capteur de mesure 6 d'une déformation mécanique et d'autre part, une structure porteuse 8 d'amplification de la déformation mécanique disposée entre le capteur 6 et le porte-plaquette 3. La structure porteuse 8 comporte deux pattes 20 et 22 disposées parallèlement sur une face d'une zone de déformation mécanique du porte-plaquette 3, de manière à transmettre la déformation mécanique de façon amplifiée au niveau du capteur 6.

La structure porteuse 8 d'amplification de la déformation mécanique permet à un opérateur d'agencer un dispositif de mesure sur des porte-plaquettes existants, sans nécessiter d'usinages couteux pouvant en outre fragiliser le porte-plaquette. Par ailleurs, ce dispositif de mesure présente l'avantage de pouvoir être disposé au plus prés de la plaquette et donc de l'effort à mesurer.

La structure porteuse 8 permet par exemple, de décaler le capteur 6 lorsque le capteur 6 est trop volumineux, tout en étant au plus proche de la zone de coupe.

La structure porteuse 8 est apte à amplifier la déformation mécanique au niveau du capteur 6, ce qui permet d'optimiser la sensibilité du capteur 6.

De préférence, la structure porteuse 8 comporte une plaque support 23 pour porter au moins un capteur 6, qui est par exemple vissé ou collé à la plaque 23.

Les deux pattes 20 et 22 sont par ailleurs soit directement reliées au capteur 6, soit reliées à la plaque support 23 portant le capteur 6.

La structure porteuse 8 présente par exemple la forme générale d'un pontet.

Ainsi, il est possible d'instrumenter des porte-plaquettes 3 déjà existants sans que ceux-ci nécessitent une adaptation particulière.

De plus, la structure porteuse 8 est avantageusement l'unique lien entre le porte-plaquette 3 et le capteur 6.

Le capteur 6 n'est alors plus influencé par des déformations supplémentaires provenant par exemple des vibrations produites par la machine-outil, de sorte que celle-ci n'a pas d'influence sur la mesure de la déformation mécanique.

En outre, on prévoit que chaque patte 20 et 22 est assemblée et collée à la zone de déformation qui comporte deux rainures 12 correspondantes.

Chaque rainure 12 est apte à s'assembler avec une patte 20 et 22 avant collage, de manière à solidifier l'assemblage.

Dans le cas où le porte-plaquette 3 comporte une sous-plaquette 2, on prévoit que les deux pattes 20, 22 soient collées dans une zone de déformation de la sous-plaquette 2 (non représenté).

Par exemple, la zone de déformation comporte deux rainures 12, pour s'assembler avec les deux pattes 20 et 22.

Les rainures 12 sont par exemple réalisées par usinage du porte-plaquette 3.

Les pattes de fixation 20 et 22 sont avantageusement en acier.

Par ailleurs, le capteur 6 de mesure est sensible à une déformation représentative d'une action de coupe entre une pièce à usiner et une plaquette 5 montée sur le porte-plaquette 3.

Ainsi, le capteur de mesure 6 est sensible à un allongement, une compression ou une torsion.

Par exemple, le capteur 6 est un capteur mécanique de déplacement tel qu'un dynamomètre de type piézo-électrique.

On peut en outre prévoir un capteur 6 comportant au moins une jauge de contrainte.

Les jauges de contraintes présentent l'avantage d'être peu chères et faciles à agencer.

On peut disposer ainsi plusieurs jauges de contraintes en pont de Wheatstone.

Pour un outil de chariotage et selon le repère X, Y, Z des figures 1a à 2b, une mesure en flexion du porte-outil 3 selon l'axe Z est liée à l'effort de coupe principal de la plaquette 5, une mesure en flexion selon l'axe Y est liée à l'effort d'avance et une mesure en flexion selon l'axe X est liée à un effort de pénétration.

De manière avantageuse, l'axe longitudinal du capteur 6, sensible à une déformation, est placé parallèlement en-dessus ou en-dessous d'une fibre neutre 27 du porte-plaquette 3 pour laquelle les contraintes sont nulles, de manière à déterminer une flexion et à l'aide de cette information, déterminer des efforts en cours d'usinage.

L'axe longitudinal de la plaque support 23 de la structure porteuse 8 peut être indifféremment placé sur la ligne neutre 27.

Par exemple, et comme illustré sur la figure 1b, l'axe longitudinal 29 du capteur 6 est placé sur une ligne parallèle et située au-dessus de la ligne neutre 27 pour être sensible à une flexion en allongement selon l'axe Z lié à l'effort de coupe principal.

On peut aussi prévoir un capteur dont l'axe longitudinal situé en-dessous de la ligne neutre pour être sensible à une déformation en compression du porte-plaquette 3.

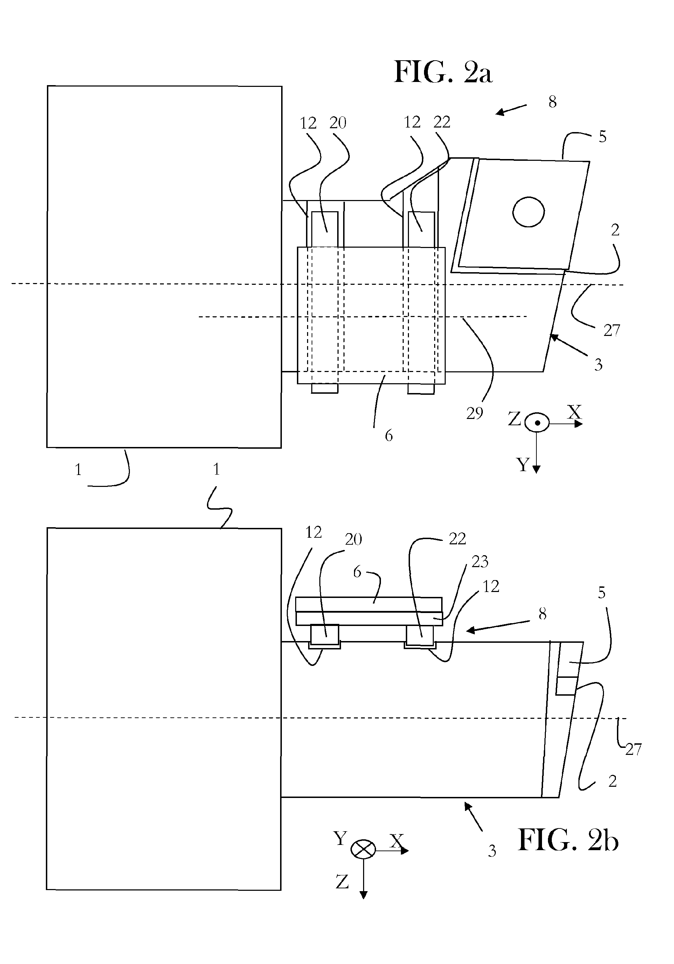

On peut en outre prévoir que le capteur 6 soit situé dans un plan contenant une direction d'avance, parallèle à une face d'appui du porte-plaquette 3, comme par exemple sur la figure 2a, dans laquelle l'axe longitudinal du capteur 6 est décalé de la ligne neutre 27, de manière à déterminer une flexion selon l'axe Y, liée à l'effort d'avance.

Par ailleurs, on peut également avantageusement prévoir que la plaque support 23 comporte plusieurs capteurs 6, notamment un premier capteur dont l'axe longitudinal est parallèle à une direction d'avance et un second capteur dont l'axe longitudinal est perpendiculaire à la direction d'avance.

On comprend qu'un tel porte-plaquette instrumenté permet de faciliter et d'optimiser le positionnement du dispositif de mesure sur le porte-plaquette pour réaliser une mesure représentative d'un paramètre de coupe.

## Revendications

1. Porte-plaquette instrumenté pour machine-outil comportant un porte-plaquette (3) pour machine-outil et un dispositif de mesure apte à déterminer un paramètre représentatif d'une action de coupe entre une pièce à usiner et une plaquette (5), monté sur ledit porte-plaquette (3), ledit dispositif de mesure comportant au moins un capteur de mesure (6) d'une déformation mécanique, **caractérisé en ce que** le dispositif de mesure comporte une structure porteuse (8) d'amplification de la déformation mécanique disposée entre ledit capteur (6) et ledit porte-plaquette (3), ladite structure porteuse (8) comportant deux pattes (20, 22) disposées parallèlement sur une face d'une zone de déformation mécanique du porte-plaquette (3), de manière à transmettre la déformation mécanique de façon amplifiée au niveau dudit capteur (6).

2. Porte-plaquette instrumenté selon la revendication 1, **caractérisé en ce que** la structure porteuse (8) présente la forme générale d'un pontet.

3. Porte-plaquette instrumenté selon l'une quelconque des revendications précédentes, **caractérisé en ce que** la structure porteuse (8) est l'unique lien entre le porte-plaquette (3) et ledit capteur (6).

4. Porte-plaquette instrumenté selon l'une quelconque des revendications précédentes, **caractérisé en ce que** la structure porteuse (8) comporte une plaque support (23) pour porter ledit capteur (6).

5. Porte-plaquette instrumenté selon l'une quelconque des revendications précédentes, **caractérisé en ce que** le capteur de mesure (6) comporte au moins une jauge de contrainte.

6. Porte-plaquette selon l'une quelconque des revendications précédentes, **caractérisé en ce que** le capteur de mesure (6) est un dynamomètre de type piézo-électrique.

7. Porte-plaquette instrumenté selon l'une quelconque des revendications précédentes, **caractérisé en ce que** les deux pattes (20, 22) sont reliées à ladite zone de déformation par collage.

8. Porte-plaquette instrumenté selon la revendication 7, **caractérisé en ce que** chaque patte (20, 22) est assemblée et collée à ladite zone de déformation comportant une rainure (12) correspondante à chaque patte (20, 22).

9. Porte-plaquette instrumenté selon l'une quelconque des revendications précédentes, comportant une sous-plaquette (2) destinée à être montée entre le porte-plaquette (3) et une plaquette de coupe (5), **caractérisé en ce que** les deux pattes (20, 22) sont collées dans une zone de déformation de la sous-plaquette (2).

10. Porte-plaquette instrumenté selon l'une quelconque des revendications précédentes, **caractérisé en ce que** l'axe longitudinal (29) du capteur (6) est placé parallèlement en-dessus ou en-dessous d'une fibre neutre (27) du porte-plaquette (3).

11. Porte-outil (1) destiné à être monté sur une machine-outil, **caractérisé en ce qu'**il comporte un porte-plaquette instrumenté selon l'une quelconque des revendications précédentes.
